# FASCICULE DE BREVET EUROPEEN

(11) **EP 3 814 653 B1**
(45) Date de publication et mention de la délivrance du brevet: **13.09.2023**
(21) Numéro de dépôt: 19734353.6
(22) Date de dépôt: 25.06.2019
(51) Int. Cl.: F16G 3/08, D03D 47/02

(54) **DISPOSITIF DE JONCTION POUR BANDE TRANSPORTEUSE**
VERBINDUNGSVORRICHTUNG FÜR FÖRDERBAND
JUNCTION DEVICE FOR CONVEYOR BELT

(30) Priorité: 26.06.2018 FR 1855731
(43) Date de publication de la demande: 05.05.2021
(73) Titulaire: FP Business Invest, 42400 Saint-Chamond (FR)
(72) Inventeur: TAVERNIER, Bernard, 42400 SAINT-CHAMOND (FR)
(74) Mandataire: Alatis
(86) Numéro de dépôt international: PCT/EP2019/066913
(87) Numéro de publication internationale: WO 2020/002378

(56) Documents cités:
- EP-A1- 1 163 459
- EP-B1- 1 163 459
- FR-A1- 2 706 964
- GB-A- 2 210 065
- US-A1- 2004 040 610

## Description

La présente invention concerne un dispositif de jonction pour bande transporteuse destiné à relier des extrémités d'au moins une bande transporteuse. Dans un but de simplification le terme de bande transporteuse aura, par convention, dans la présente description, aussi bien le sens de bande transporteuse que celui de courroie.

On connaît les bandes transporteuses, appelées également tapis transporteurs, utilisées pour transporter, ou convoyer, différents matériaux ou différents produits, tels que du charbon, des minerais, des produits industriels ou agricoles. Ces bandes transporteuses consistent en des bandes réalisées en un élastomère armé, ou en une matière de synthèse armée, d'une longueur et d'une largeur appropriées, dont les extrémités doivent être reliées entre elles, avant montage, ou après montage, sur des dispositifs de support et d'entraînement comportant des rouleaux de renvoi et des rouleaux fous. Souvent ces dispositifs comportent également des organes tendeurs, ayant pour but de bien tendre la bande transporteuse.

Jusqu'à présent différents moyens ont été utilisés pour effectuer cette liaison des extrémités des bandes transporteuses.

À l'origine, et encore aujourd'hui, on utilise la vulcanisation lorsque la bande est constituée d'un élastomère vulcanisable armé. Après un travail de préparation destiné à créer dans chaque extrémité des profils complémentaires qui s'appliquent les uns sur les autres lorsque l'on rapproche lesdites extrémités, la vulcanisation est effectuée avec apport de chaleur et de pression comme cela est bien connu. Une variante de la vulcanisation est le collage à froid.

Un autre moyen de liaison connu consiste dans le fait d'utiliser des agrafes en forme générale de U, découpées dans du feuillard métallique, lesquelles agrafes comportent des plaques supérieures et des plaques inférieures reliées par des charnons, ces agrafes étant fixées en deux séries à cheval sur chacune des extrémités de bande transporteuse à relier, de telle sorte que les charnons dépassent et que ceux d'une série puissent être imbriqués entre les charnons de l'autre série, une tige de liaison et d'articulation étant ensuite passée à l'intérieur des charnons imbriqués de manière à relier ainsi les deux extrémités en formant une sorte de charnière. Les moyens connus utilisés pour fixer les agrafes sur les extrémités de bande transporteuse consistent en des moyens de fixation à tige tels que des crampons, des rivets et des vis.

Dans un passé plus récent on a proposé des dispositifs de jonction faisant appel à des éléments de liaison plats généralement en élastomère armé ou en matière de synthèse armée, disposés respectivement sur un côté et sur l'autre côté des extrémités de bande transporteuse et fixés sur lesdites extrémités qu'il s'agit de relier. Des exemples de tels dispositifs de jonction sont donnés dans les brevets EP-0827575-B1 et EP-1163459-B1.

Ces dispositifs comportent une plaque de jonction supérieure et une plaque de jonction inférieure, éventuellement reliées par une partie centrale. Ces plaques de jonction inférieure et supérieure présentent un écartement adapté pour y engager l'extrémité respective d'une bande transporteuse, en la faisant venir approximativement en butée contre la partie centrale, ou bien dans le cas où le dispositif de jonction ne présente pas de partie centrale, contre une entretoise prévue à cet effet lors du montage, puis retirée ultérieurement.

En d'autres termes, ces dispositifs de jonction comportent deux paires d'ailes de fixation en vis-à-vis, les extrémités de la bande transporteuse étant introduites respectivement entre deux ailes d'une même paire.

La fixation des parties inférieure et supérieure formant plaque de jonction sur les extrémités de la bande transporteuse s'effectue généralement au moyen de rivets, de pointes, de crampons, de systèmes vis-écrous, ou encore par collage à froid ou par vulcanisation à plat des ailes contre les surfaces plates extérieures de la bande transporteuse engagées entre les ailes.

Les dispositifs de jonction sont généralement réalisés en une matière souple et élastique, par exemple en caoutchouc vulcanisé, ou en une matière de synthèse, telle que du polyuréthane, dans laquelle est noyée une armature, généralement textile, présentant une extensibilité dans le sens longitudinal.

Le sens longitudinal est par convention et pour la commodité et la clarté de l'exposé dans l'ensemble de la présente description le sens longitudinal de la bande transporteuse, et s'applique également au dispositif de jonctionnement considéré tel qu'il doit être monté sur la bande transporteuse. Le sens transversal est le sens perpendiculaire au sens longitudinal ainsi défini, quelles que soient les dimensions du dispositif de jonctionnement considéré isolément.

L'extensibilité des armatures de ce genre de dispositifs de jonctionnement dans le sens longitudinal a pour but de permettre aux dispositifs de jonctionnement montés sur les bandes transporteuses, de franchir de façon répétée, sans usure ni fatigue excessive pouvant entraîner une détérioration rapide, les parties courbes du parcours des bandes transporteuses, à savoir, le contournement des rouleaux d'entraînement, des rouleaux de renvoi et des rouleaux tendeurs.

En effet, lors de ce fonctionnement la partie supérieure des dispositifs de jonction subit une force de traction tandis que leur partie inférieure (c'est-à-dire celle orientée vers la surface extérieure des rouleaux) subit une force de compression, et, ce, en raison de la différence du parcours de ces parties, ces parcours étant directement proportionnels au rayon de courbure, qui varie en raison de l'épaisseur des dispositifs de jonctionnement.

Les contraintes étant bien différentes entre les parties inférieure et supérieure, et afin d'améliorer encore la résistance à l'usure de ces dispositifs de jonctionnement, la Demanderesse a amélioré son produit par le passé de sorte à conférer à la partie supérieure une extensibilité plus grande que celle de la partie inférieure.

Dans ce type de jonction de bande transporteuse, la partie centrale a ensuite évolué de sorte à être désolidarisée des plaques inférieure et supérieure, ceci pour laisser place à l'utilisation d'entretoises indépendantes utilisées au moment du montage contre lesquelles vient buter la première des extrémités de la bande transporteuse qui est mise en place dans la jonction, entre les plaques inférieure et supérieure, puis ces entretoises sont retirées avant mise en place de la seconde des extrémités de la bande transporteuse.

En effet, les dispositifs de jonction étaient réalisés par moulage ou par injection et présentaient une structure en « H » dont les plaques inférieure et supérieure et la partie centrale étaient formées d'un seul tenant. Ceci exigeait pour leur fabrication autant de moules que d'épaisseurs de bandes transporteuses rencontrées sur le terrain, et ces dispositifs de jonction devaient être fabriqués, de ce fait, en très petites séries, ce qui augmentait le prix de revient, à la fabrication, au stockage et à la distribution.

Cette problématique, à savoir celle de la multiplicité des moules et des produits moulés devant faire face aux épaisseurs variées de bandes transporteuses, a été résolue notamment en produisant, comme exposé ci-avant, les dispositifs de jonction en trois parties distinctes : une partie constituant des ailes supérieures gauche et droite formant une seule pièce, une partie constituant des ailes inférieures gauche et droite formant une seule pièce, et une partie intermédiaire, correspondant à la barre médiane du profil en « H », cette partie intermédiaire formant entretoise.

Dans une telle configuration, il devient possible de fabriquer les deux plaques inférieure et supérieure isolément et chacune est configurée de sorte à être adaptée aux efforts qu'elles subissent (forces de compression/traction) et aux contraintes associées.

Par exemple, la plaque inférieure est agencée pour subir sans dommage le passage sur des rouleaux d'entraînement, des rouleaux de renvoi et des rouleaux tendeurs, entraînant ou renvoyant la bande transporteuse aux extrémités de laquelle est monté le dispositif de jonction considéré, la plaque inférieure venant directement au contact de ces organes d'entraînement de la bande.

La plaque supérieure est quant à elle directement au contact des différents matériaux ou différents produits transportés sur la bande transporteuse. Par ailleurs, la plaque supérieure est aussi généralement balayée par des racleurs.

Plus récemment, la Demanderesse a fait évoluer ce produit pour obtenir un dispositif de jonction dont les deux plaques de jonction inférieure et supérieure sont similaires voire identiques de sorte qu'il il devient possible de fabriquer un seul type de plaques de jonction et non plus deux plaques de jonction différentes.

En effet, les plaques de jonction sont généralement découpées dans une bande ou portion de bande continue de plusieurs plaques de jonction successives. Selon cette évolution, il est alors possible de fabriquer une plaque de jonction inférieure et une plaque de jonction supérieure correspondante à partir de la même bande ou portion de bande de plaques de jonction.

Il résulte de l'application d'une telle solution que les extensibilités des armatures intégrées dans les plaques de jonctions sont identiques, qu'il s'agisse de la plaque de jonction inférieure ou supérieure, puisqu'elles sont formées à partir de la même bande ou portion de bande fabriquée.

Dans ce cas, et contrairement aux préjugés d'un homme du métier, on pouvait s'attendre à ce que l'utilisation d'une armature identique entre les deux plaques de jonction inférieure et supérieure constitue une évolution à contre-courant de celle visant à conférer à la partie supérieure une extensibilité plus grande que celle de la partie inférieure.

Au contraire, la maîtrise de l'élasticité des armatures est telle qu'en utilisant une armature d'élasticité bien déterminée, il est possible de fabriquer des plaques de jonction répondant aux problèmes de l'art antérieur, c'est-à-dire en garantissant sa résistance à l'usure, bien qu'elles soient utilisées à la fois dans la plaque de jonction inférieure et dans la plaque de jonction supérieure.

Avantageusement dans ce cas, l'armature (généralement de type textile) est configurée de sorte à présenter une extensibilité comprise entre 10% et 25%, de préférence entre 15% et 20%. On entend par le caractère extensible, la capacité d'allongement de l'armature, c'est-à-dire qu'une extensibilité comprise entre 10 et 25% signifie qu'elle est configurée pour résister à un allongement d'au moins 10% et de maximum 25%, ceci sans rupture ni endommagement.

Cette extensibilité de l'armature, c'est-à-dire cet allongement élastique longitudinal, détermine également l'extensibilité de la plaque de jonction elle-même étant donné que l'armature présente une extensibilité plus faible que celle de la matière souple et élastique dans laquelle elle est noyée (caoutchouc vulcanisé, matière de synthèse telle que du polyuréthane, etc.).

Une telle extensibilité dans le sens longitudinal assure un bon compromis de résistance aux contraintes subies à la fois par la plaque de jonction inférieure et par la plaque de jonction supérieure.

En tout état de cause, l'extensibilité est devenue une caractéristique prépondérante dans la conception d'une telle plaque de jonction en vue d'obtenir un dispositif de jonction suffisamment souple et élastique pour subir sans dommage le passage sur des rouleaux d'entraînement et sur des rouleaux de renvoi tout en étant dotée d'une résistance à la traction le rendant apte à résister sans dommage à tous les efforts qu'elle subit.

Ces caractéristiques d'extensibilité et de résistance à de tels efforts de la plaque de jonction sont conférées à la fois par le matériau souple et élastique (caoutchouc vulcanisé, matière de synthèse telle que du polyuréthane) formant la plaque de jonction et par l'armature qui y est intégrée offrant à la fois une extensibilité dans le sens longitudinal et une résistance adaptée pour résister aux plus grands efforts de traction subis par la bande transporteuse.

Traditionnellement ces armatures, généralement tissées, sont découpées dans des rouleaux du tissu destiné à former lesdites armatures. Une telle opération est relativement peu coûteuse et, jusqu'à présent, a permis d'obtenir de bons résultats en terme de résistance.

L'expérience sur le terrain aidant, il a été constaté qu'une telle armature lorsqu'elle est sollicitée de manière importante et répétée, notamment par les efforts de traction que les moyens de fixation des plaques de jonction avec les extrémités de la bande transporteuse appliquent sur le tissage de l'armature, pouvaient amener ladite armature à se déformer localement et à se détendre.

Ces déformations sont localisées au niveau de chacun des moyens de fixation et sont orientées globalement dans le sens de la traction exercées par la bande transporteuse sur les moyens de fixation puis retransmise par les moyens de fixation vers les plaques de jonction, en particulier vers les armatures, d'où il résulte un déplacement des fibres textiles les rendant localement plus lâches et pouvant par exemple provoquer un élargissement des mailles de l'armature textile.

Lorsque ces moyens de fixation sont situés en bordure de l'armature, et donc en bordure de la plaque de jonction correspondante, l'élargissement de ces mailles peut provoquer un détissage de l'armature concernée lors de l'utilisation du dispositif de jonction, ce qui nuit à sa résistance. Il est entendu par le vocable « détissage », le désenchevêtrement des fibres constitutives des mailles du textile formant l'armature de façon générale, qu'il s'agisse indifférement d'un textile tissé ou bien tricoté.

Une solution possible serait de modifier l'armature textile de sorte à ce que le tissage soit plus dense et ainsi, plus résistant. Une telle solution s'avère pratique à mettre en oeuvre mais présente ses limites étant donné qu'elle nuit à l'extensibilité souhaitée de la plaque de jonction. En effet, une densité plus importante du tissu, en pratique un nombre de fils par unité de surface plus grand, entraîne une rigidité plus grande de l'armature et donc de la plaque de jonction.

Une autre solution serait de concevoir une armature présentant un tissage de densité variable en fonction de la localisation de moyens de fixation par rapport au dispositif de jonction. Toutefois une telle solution implique une fabrication plus longue et difficile, ce qui s'avère particulièrement onéreuse à mettre en oeuvre.

Un dispositif de jonction selon le préambule de la revendication 1 est connu du document FR2706964A1.

L'objet de la présente invention est de proposer une solution qui corresponde à une évolution de ce type de jonctions existantes et qui permette d'améliorer la qualité et la résistance du dispositif de jonction tout en permettant une extensibilité améliorée, et plus généralement en garantissant la qualité, l'efficacité et la durabilité du dispositif de jonction.

À cet effet, l'invention concerne un dispositif de jonction pour bande transporteuse, destiné à relier deux extrémités d'au moins une bande transporteuse longitudinale, le dispositif de jonction comprenant au moins deux plaques de jonction configurées pour recouvrir chacune un côté distinct des extrémités de la bande transporteuse de sorte à ce que ladite bande transporteuse soit disposée entre les deux plaques de jonction dans une position assemblée d'utilisation, les plaques de jonction étant fixées ensemble par des moyens de fixation agencés pour traverser respectivement une plaque de jonction, une des extrémités de la bande transporteuse puis l'autre plaque de jonction, chacune des plaques de jonction étant réalisées en une matière souple et élastique et dotée d'une armature, ladite armature étant formée d'au moins une couche de textile, ladite armature étant délimitée longitudinalement par des bords transversaux, l'armature s'étendant transversalement par rapport à ladite bande transporteuse en position assemblée, lesdits bords présentant chacun un renfort de détissage de sorte à éviter le détissage de l'armature lors de l'utilisation du dispositif de jonction, le dispositif de jonction étant caractérisé en ce que le renfort de détissage comprend au moins un fil d'apport.

Il est rappelé que dans la présente description, l'axe longitudinal correspond au sens longitudinal de la bande transporteuse, et s'applique également au dispositif de jonctionnement considéré tel qu'il doit être monté sur la bande transporteuse, l'axe transversal étant le sens perpendiculaire au sens longitudinal ainsi défini, quelles que soient les dimensions du dispositif de jonctionnement considéré isolément.

Les bords transversaux de l'armature désignent ainsi les bords traversant la bande transporteuse sur sa largeur, quand bien même il n'est pas forcément perpendiculaire à ladite bande transporteuse associée.

Grâce à ces caractéristiques, l'armature forme une bande, ou ruban, noyée dans la matière souple et élastique de la plaque de jonction associée et ses bords soumis aux principaux efforts de traction sont ainsi renforcés permettant d'éviter tout risque de détissage.

De façon générale, et jusqu'à aujourd'hui, la rangée transversale des moyens de fixation le long de la bordure extérieure, c'est-à-dire au voisinage direct du bord transversal, sur les deux extrémités opposées longitudinalement de la jonction, avait essentiellement une fonction de maintenir le bord de la jonction plaqué sur la bande transporteuse.

Avec une telle armature sous forme de bande et renforcée le long de ses bords transversaux, cela permet d'éviter le détissage lors d'un effort perpendiculaire au fil de chaîne, ce qui apporte un avantage supplémentaire indéniable.

Lors de l'utilisation de la bande transporteuse munie d'un dispositif de jonction de ce type, la jonction est sollicitée principalement par une force de traction qui s'opère dans le sens trame de la jonction. Celle-ci n'étant pas très large dans le cadre d'une telle application, il est nécessaire d'avoir un nombre suffisant de fils de chaîne entremêlés avec les fils de trame derrière chaque rangée de trous : un tel tissage de l'armature assure un blocage des fils et offre une certaine résistance qui, multipliée par le nombre de moyens de fixation, confère une certaine résistance de la jonction et évite un peignage prématuré de l'armature localisée sur ce bord.

Au niveau du bord transversal de l'armature de la jonction il n'est pas possible d'avoir une largeur de tissu suffisamment importante pour reproduire le même effet et ainsi diviser l'effort de traction par le nombre de rangées.

Avec un renfort de détissage selon l'invention situé en bordure, le long du bord transversal de l'armature, ce phénomène est réduit et il a été constaté une répartition plus homogène de l'effort de traction sur toutes les lignes de moyens de fixation.

Le renfort de détissage est un renfort tissé. Un tel renfort confère une bonne résistance adaptée aux efforts dans le cadre d'une utlisation pour la jonction de bande transporteuse.

En alternative voire en complément, le renfort de détissage comporte un renfort collé et/ou soudé et/ou une couture s'étendant le long du bord transversal de l'armature.

Selon une configuration tenchnique avantageuse, l'armature comprend des fils de trame et des fils de chaîne, le renfort tissé de détissage étant formé à partir des fils de trame et/ou de chaîne de l'armature.

Par exemple, le renfort de détissage évitant le détissage de l'armature est formé par le retour d'un fil de trame de part et d'autre des fils de chaîne de l'armature, le retour du fil de trame entourant le fil de chaîne du bord transversal associé. En d'autres termes et dans cette configuration, la trame est insérée alternativement de chaque côté du ruban formé par l'armature, le liage étant effectué par l'entrecroisement des fils de chaîne et des fils de trame.

Il est entendu par la « trame » , l'ensemble des fils qui parcourent le tissu de l'armature dans le sens de la largeur tel qu'il est produit. Dans le cas présent, l'armature est fabriquée sous forme de ruban destiné à être positionné, une fois noyée dans la plaque de jonction, de façon transversale par rapport à la bande transporteuse.

La « chaîne » désigne quant à elle l'ensemble des fils courant dans le sens de la longueur du tissu tel qu'il est produit, parallèles à la lisière, en particulier au bord transversal de l'armature, et qui s'entrecroisent avec les fils de trame pour former l'armature.

Un tel renfort de détissage nécessite la fabrication de l'armature sous forme de ruban à l'aide par exemple d'un métier à navette. Une telle solution est certes plus chère qu'une fabrication à l'aide d'un métier à aiguille, du fait qu'il travaille plus lentement, mais l'armature ainsi obtenue avec un tel renfort de détissage offre une tenue adaptée et une bonne souplesse pour l'application aux jonction de bandes transporteuses.

Pour éviter que le tissage soit trop mobile compte tenu des efforts supportés par l'armature durant l'utilisation, il est avantageux de densifier l'armature en augmentant le nombre de fils de chaîne et de fils de trame par unité de surface. En effet, une telle densification du tissage de l'armature limite la dispersion des mailles lors de l'utilisation et permet une résistance améliorée. Dans un tel contexte, l'armature est configurée de préférence de sorte à ce que sa densité, c'est-à-dire son nombre de fils de chaîne et de trame par unité de surface, est suffisamment élevée pour résister aux efforts de traction, mais suffisamment faible pour présenter une souplesse adaptée à son utilisation aux jonctions de bandes transporteuses.

Un autre avantage d'un tel renfort de détissage est qu'il n'entraine pas de surépaisseur de l'armature, localement au niveau de son bord transversal le long duquel le renfort s'étend.

Dans une autre configuration, le renfort de détissage est formé par la trame liée à elle-même.

Un tel renfort de détissage peut par exemple être obtenu lors de la fabrication de l'armature en utilisant un métier de tissage à aiguilles.

Selon l'invention, le renfort tissé de détissage est tissé à partir d'au moins un fil d'apport.

Par exemple dans ce cas, le renfort de détissage est formé par le fil d'apport liant la trame le long du bord transversal.

Un tel renfort de détissage peut par exemple être obtenu lors de la fabrication de l'armature en utilisant un métier de tissage à aiguilles.

Alternativement, le renfort de détissage peut être formé par un entrecroisement de fils de chaîne avec le fil d'apport lié au fil de trame. Même si un tel mode de réalisation est relativement complexe à mettre en oeuvre, il présente une résistance adaptée aux efforts de traction.

Dans une configuration technique avantageuse, le fil de trame et le fil d'apport sont maillés ensemble pour former le renfort de détissage.

Un tel mode de réalisation permet une indémaillabilité optimisée pour des applications où la présence d'une surépaisseur en lisière n'a pas d'importance.

Dans une configuration technique avantageuse, en particulier s'il est souhaité conserver une épaisseur régulière en évitant la présence d'une surépaisseur en lisière tout en assurat une indémaillabilité améliorée, le renfort de détissage comprend un fil d'apport avec lequel les fils de trame sont liés par maillage et dont la maille est bloquée en plus par un fil supplémentaire de blocage.

Ce fil de blocage assure en outre une sécurité supplémentaire en paliant à toute rupture du fil d'apport permettant ainsi, même en cas de rupture du fil d'apport, d'éviter que l'armature se détisse ou se démaille.

Le fil d'apport et de retenue représentent participent donc à une grande résistance malgré une dimension relativement faible. En proportion, le fil d'apport et le fil de blocage représentent moins de 0,5% d'une armature, et représentent généralement entre 0,1 et 0,5%. Ce ratio évolue en fonction de la dimension de l'armature entre ses bords transversaux étant donné que le renfort ne varie pas en fonction de cette dimension. Il en résulte que plus l'armature est large, prise entre ses dux bords transversaux, et plus ce ratio sera faible.

Selon un mode de réalisation, le fil d'apport et/ou le fil de retenue sont formés à base de fibres synthétiques, par exemple à base de polymère(s) tel que le polyester ou du polyamide. Bien entendu, d'autres matériaux peuvent être utiliés dans une telle application qui sont assez souples pour être tissés et assez résilstant pour une telle application. On peut citer par exemple le kevlar, le vectran

De préférence, le fil d'apport et/ou le fil de retenue est(sont) texturé(s) ce qui permet d'améliorer encore la résistance du renfort de détissage, d'autant plus dans une utlisation telle que l'armature est noyée dans une matière souple et élastique telle que du caoutchouc vulcanisé.

Un tel fil d'apport est particulièrement simple à mettre en oeuvre dans la réalisation de l'armature. Toutefois, il va contre les idées reçues qu'un tel fil d'apport participent efficacement à la rétention des fils de chaîne et à éviter le détissage de l'armature compte tenu des efforts considérables subis par le textile dans ce type d'application.

Enfin, la Demanderesse a constaté qu'un tel renfort de détissage, en particulier muni d'un fil d'apport, et d'autant plus lorsqu'il est complété avec un fil de blocage, permet non seulement de limiter efficacement un détissage et un peignage prématuré de l'armature localisé sur ce bord, mais aussi, et indirectement par effect successif sur les fils de chaîne adjacents, limite cet effet de peignage prématuré au niveau de chacun des moyens de fixation qui traversent l'armature, et ceci quand bien même les efforts appliqués à l'armature dans le cadre d'une telle application d'une jonction de bande transporteuse sont considérables.

D'autres caractéristiques et avantages de l'invention ressortiront à la lecture de la description qui suit, donnée uniquement à titre d'exemple, en référence aux figures annexées, qui illustrent :
- figure 1, une vue en plan d'un dispositif de jonction selon un mode de réalisation, vu par le dessus ;
- figure 2, une vue en coupe longitudinale selon la coupe A-A de la figure 1 d'un dispositif de jonction, représentant en éclaté les différents éléments qui le constituent ;
- figure 3, une vue d'ensemble en perspective qui illustre un dispositif de jonction selon un mode de réalisation de l'invention qui relie les deux extrémités d'une bande transporteuse ;
- figure 4, une vue en section longitudinale, qui illustre un dispositif de jonction selon un mode de réalisation ;
- figure 5, une vue en coupe d'un moyen de fixation selon un mode de réalisation ;
- figures 6 à 12, des schémas de renforts de détissage d'une armature selon différents modes de réalisation.

Sur l'ensemble de ces figures, des références identiques ou analogues désignent des organes ou ensembles d'organes identiques ou analogues.

De plus, les termes « supérieur », « inférieur », « vertical » et leurs dérivés font référence à la position ou à l'orientation d'un élément ou d'un composant, cette position ou cette orientation étant considérée lorsque les plaques de jonction sont en configuration de service et s'étendent dans un plan horizontal.

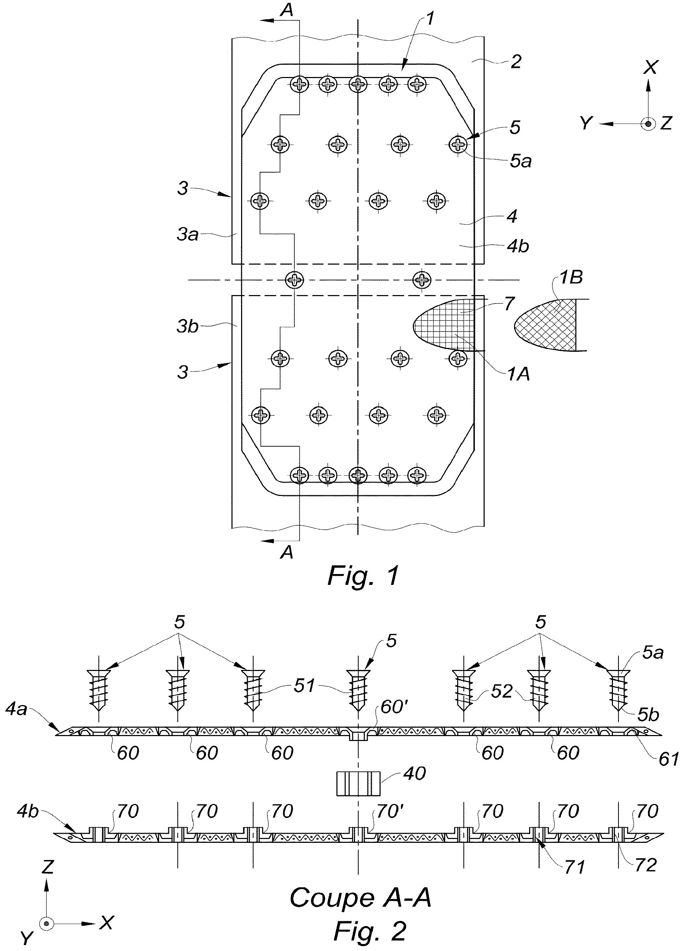

La figure 1, qui est une vue en plan, par le dessus, d'un dispositif de jonction 1 fait apparaître une plaque de jonction 4 supérieure d'un dispositif de jonction 1.

Le dispositif de jonction 1 comporte une première plaque de jonction inférieure 4a visible à la figure 2 par exemple, et une seconde plaque de jonction supérieure 4b.

Ces plaques de jonction 4a, 4b sont réalisées en une matière 6 souple et élastique, par exemple en caoutchouc vulcanisé, ou en une matière de synthèse telle que du polyuréthane et elles comportent une armature 7 incorporée, généralement de type textile.

Les écorchés 1A et 1B font apparaître deux types d'armatures 7 de type textile, qui sont tissées et comprennent des fils de trame 10 et des fils de chaîne 11 : dans l'armature 1A le tissu est disposé de façon telle que ses fils de trame 10, ou bien ses fils de chaîne 11, sont orientés au moins approximativement dans le sens longitudinal X du dispositif de jonction 1.

Nous rappelons que par convention le sens longitudinal X du dispositif de jonction 1 correspond, dans la présente description, au sens longitudinal X de la bande transporteuse 2, le dispositif de jonction 1 étant monté sur les extrémités 3 de la bande transporteuse 2 qu'il relie.

Le sens transversal Y du dispositif de jonction 1 est, selon la même convention, le sens perpendiculaire au sens longitudinal X. Cette convention est appliquée quelles que soient les dimensions effectives du dispositif de jonction 1 dans ces deux directions.

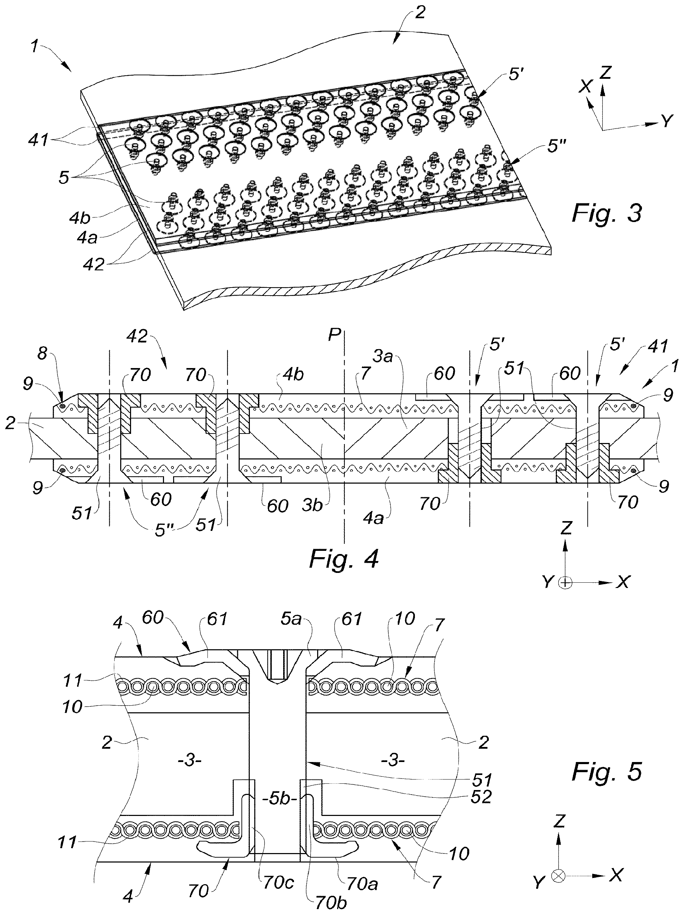

Les plaques de jonction 4a, 4b sont configurées pour recouvrir chacune un côté distinct des extrémités 3 de la bande transporteuse 2 de sorte que la bande transporteuse 2 est interposée verticalement entre les deux plaques de jonction 4a, 4b (comme on peut le voir par exemple à la figure 4).

On remarque également sur cette figure 1 des têtes 5a des vis 5 qui constituent un exemple de moyens de fixation ou d'assemblage 5 du dispositif de jonction 1 à la bande transporteuse 2.

Le dispositif de jonction de la figure 1 est composé de trois éléments : un élément formant plaque de jonction supérieure 4b, un élément intermédiaire 40 situé sous la partie médiane de la plaque de jonction 4 qui n'est pas visible sur la figure 1 autrement que par les deux lignes de pointillés situées de part et d'autre des deux vis 5 médianes délimitant sous la plaque de jonction 4 supérieure les bords des extrémités de la bande transporteuse 2 à relier, et un élément formant plaque de jonction inférieure 4a, non visible sur la figure 1, lequel est situé sous l'élément intermédiaire 40 et sous l'élément formant plaque de jonction supérieure 4b.

La coupe éclatée de la figure 2 fait apparaître successivement :
- des vis d'assemblage 51 formant moyens de fixation 5,
- la plaque de jonction 4b supérieure,
- des inserts 60 incorporés dans la plaque de jonction 4 supérieure,
- l'élément intermédiaire 40 formant entretoise et comportant une douille traversante incorporée, disposée verticalement suivant un axe vertical Z,
- la plaque de jonction inférieure 4a comportant des inserts taraudés 70.

Les inserts 60 agencés pour recevoir les têtes 5a de vis 51 se présentent de façon générale sous forme de rondelles 61 percées comportant une cuvette apte à loger les têtes 5a des vis 5 destinées à passer dans le trou des rondelles percées. L'insert central 60' se présente de façon générale comme les inserts 60 mais il comporte une partie tubulaire centrale, dont la surface cylindrique intérieure est apte à laisser passage, avec un très faible jeu, à la vis 5 correspondante, cette vis ne se vissant donc pas dans l'insert 60'. La partie tubulaire centrale de l'insert 60' dépasse à partir de la surface inférieure de la plaque de jonction 4 supérieure.

Les inserts 70 comportent chacun une partie tubulaire centrale dont la surface cylindrique intérieure est taraudée et est apte à recevoir une vis 51 vissée dans le taraudage, lesdites parties tubulaires centrales dépassant à partir de la surface supérieure de la plaque de jonction 4a inférieure du dispositif de jonction 1. Les inserts médians 70' de la plaque inférieure se présentent comme les inserts 70.

Comme évoqué en préambule, la Demanderesse a fait évoluer récemment ce type de produit décrit ci-avant pour obtenir un dispositif de jonction dont les deux plaques de jonction inférieure et supérieure sont similaires voire identiques de sorte qu'il il devient possible de fabriquer un seul type de plaques de jonction et non plus deux plaques de jonctions différentes.

Un exemple de dispositif de jonction 1 selon ce type est illustré à la figure 3.

Le dispositif de jonction 1 illustré sur cette figure 3 comporte une première plaque de jonction inférieure 4a, et une seconde plaque de jonction supérieure 4b.

Les plaques de jonction 4a, 4b sont configurées pour recouvrir chacune un côté distinct des extrémités 3 de la bande transporteuse 2 de sorte que la bande transporteuse 2 est interposée verticalement entre les deux plaques de jonction 4a, 4b.

Les plaques de jonction 4a, 4b forment une première paire d'ailes 41 qui pince une première extrémité 3a de la bande transporteuse 2 et une seconde paire d'ailes 42 qui pince une seconde extrémité 3b de la bande transporteuse 2.

Ici les moyens de fixation sont répartis de sorte à ce qu'ils fixent une première paire d'aile 41 dans un sens et fixent la deuxième paire d'aile 42 dans l'autre sens.

Les plaques de jonction 4 sont généralement découpées dans une bande ou portion de bande continue de plusieurs plaques de jonction successives. Selon cette évolution, il est alors possible de fabriquer une plaque de jonction inférieure et une plaque de jonction supérieure correspondante à partir de la même bande ou portion de bande de plaques de jonction.

La figure 4 une vue en section longitudinale, qui illustre un dispositif de jonction 1 selon un mode de réalisation similaire à celui de la figure 3. Il diffère sensiblement de ce mode de réalisation en ce que les moyens de fixation 5 s'étendent sur deux rangées, au lieu de trois rangées, s'étendant transversalement par rapport à la bande transporteuse 2.

Plus précisément, la première paire d'ailes 41 et la seconde paire d'ailes 42 sont agencées de part et d'autre d'un plan P de jonction qui s'étend perpendiculairement aux plaques de jonction 4a, 4b, c'est-à-dire dans un plan vertical et transversal par rapport à la bande transporteuse selon l'exemple décrit ici.

Le plan P de jonction s'étend transversalement au centre de l'ensemble formé par la plaque de jonction inférieure 4a et la plaque de jonction supérieure 4b.

De plus, le dispositif de jonction 1 comporte une première série de moyens de fixation 5' qui sont prévus pour fixer la première paire d'ailes 41 sur la première extrémité 3a de la bande transporteuse 2 et une seconde série de moyens de fixation 5" qui sont prévus pour fixer la seconde paire d'ailes 42 sur la seconde extrémité 3b de la bande transporteuse 2.

La première série et la seconde série de moyens de fixation 5', 5" comportent chacune deux rangées (trois sur la figure 3) de moyens de fixation 5, chaque rangée comportant une pluralité de moyens de fixation 5 qui sont alignés transversalement et espacés de façon régulière. Bien entendu, ce nombre de rangées peut varier.

La figure 5 est une vue en coupe selon un plan vertical d'un exemple de moyen de fixation 5, lesquels sont illustrés plus schématiquement sur la figure 4.

Ces moyens de fixation 5 comprennent :
- un élément de liaison 51 qui relie un premier élément de fixation 60 avec un second élément de fixation 70, à travers la bande transporteuse 2, cet élément de liaison étant constitué par une vis 51 qui s'étend verticalement depuis une tête 5a jusqu'à un corps formant tronçon d'ancrage 5b muni d'un filetage 52.
- le premier élément de fixation 60 agencé pour recevoir la tête 5a de vis 51 et présentant la forme d'une rondelle percées par un orifice pour le passage de l'élément de liaison 51 et comportant un siège autour de cet orifice formant cuvette qui loge la tête 5a de la vis 51 associée ;
- le second élément de fixation 70 présentant la forme d'une douille qui est au moins en partie noyée dans la plaque de jonction 4, et comprenant une collerette 70a annulaire qui est saillante radialement par rapport au corps 70b de la douille 70 pour assurer son ancrage axial dans la matière de la plaque de jonction dans laquelle elle est noyée;

Les moyens de fixation 5' de la première série comportent chacun un premier élément de fixation 60, un second élément de fixation 70 et un élément de liaison 51 vertical qui relie le premier élément de fixation 60 sur le second élément de fixation 70, à travers la bande transporteuse 2.

De plus, le second élément de fixation 70 comprend une partie tubulaire 70b qui délimite un trou taraudé 70c vertical et qui fait saillie verticalement depuis la face de la première plaque de jonction 4 orientée vers l'extrémité de la bande transporteuse 2 entre les deux plaques de jonction 4a, 4b en position d'assemblage. Cette saillie verticale est également recouverte de la matière vulcanisée formant la plaque de jonction de sorte que chaque partie tubulaire 40 qui fait saillie verticalement depuis cette face est recouverte de caoutchouc vulcanisé et donc noyée dans la plaque de jonction associée.

Le trou taraudé 70c coopère avec le tronçon d'ancrage 5b de l'élément de liaison 51.

Ainsi, les moyens de fixation 5' de la première série permettent de serrer la première paire d'ailes 41 sur la première extrémité 3a de la bande transporteuse 2.

De même, les moyens de fixation 5" de la seconde série et permettant de serrer la deuxième paire d'ailes 42 sur la deuxième extrémité 3b de la bande transporteuse 2 sont identiques, mais inversés dans leur agencement.

En effet, en référence à la figure 4, le premier élément de fixation 60 de chaque moyen de fixation 5' de la première série est monté sur la plaque de jonction 4b supérieure et le second élément de fixation 70 est monté sur la plaque de jonction 4a inférieure.

La plaque de jonction inférieure 4a et la plaque de jonction supérieure 4b sont identiques, et elles sont décalées angulairement d'un demi-tour autour d'un axe vertical.

Du fait de cette inversion des moyens de fixation 5, est particulièrement avantageux étant donné que cela simplifie grandement la pose de la plaque de jonction par un opérateur puisqu'en fixant la plaque de jonction à une extrémité de la bande transporteuse les moyens de fixation 5, en particulier les éléments de liaison 51, présentent une orientation similaire pour une même extrémité de la bande transporteuse et l'opérateur n'est pas obligé de changer d'orientation pour la mise en place de ces éléments de liaison sur cette même extrémité. En effet, l'alignement vertical des premier et deuxième éléments de fixation 60 ,70 détermine l'orientation des moyens de liaison 51, notamment des vis qui s'étendent verticalement depuis la tête 5a jusqu'au corps formant tronçon d'ancrage 5b taraudé.

On notera en outre que les première et seconde séries 5', 5" de moyens de fixation 5 sont espacées entre elles longitudinalement par une zone médiane sensiblement au droit du plan P de jonction qui est libre de moyens de fixation 5, c'est-à-dire que dans cette zone, le dispositif de jonction 1 ne comporte pas de moyens de fixation 5. Ceci améliore l'élasticité du dispositif de jonction 1 à cet endroit et améliore sa tenue mécanique. En effet, une rangée de dispositifs de fixation 5 au centre du dispositif de jonction 1 pourrait favoriser dans une moindre mesure une amorce de rupture.

En outre, le dispositif de jonction 1 illustré sur les figures 3 et 4 assure la fixation des deux extrémités de la bande transporteuse sont en contact l'une contre l'autre.

Pour l'installation d'un tel dispositif de jonction, il est utilisé des entretoises (non illustré sur ces figures 3 et 4) au moment du montage contre lesquelles vient buter la première des extrémités de la bande transporteuse qui est mise en place dans la jonction, entre les plaques inférieure et supérieure, puis ces entretoises sont retirées avant la mise en place de la seconde des extrémités de la bande transporteuse.

Est illustré également sur ces figures 4 et 5, une armature 7 tissée comprenant des fils de trame 10 et de chaîne entrecroisés ensemble, ladite armature 7 étant délimitée, longitudinalement par rapport à la bande transporteuse 2, par des bords transversaux 8.

Il est fait remarquer que sur ces figures l'armature 7, et notamment les fils de trame 10 et de chaîne 11 ne sont pas illustrés à l'échelle par rapport à la plaque de jonction 4. Par ailleurs, l'illustration de l'armature 7 est purement schématique, il est bien entendu par exemple que l'armature 7 n'est pas sectionnée au droit des moyens de fixation 5, comme le dessin peut le laisser suggérer, mais que le maillage de l'armature est évidement continu.

Quel que soit le mode de réalisation mis en oeuvre, les plaques de jonction présentent une extensibilité prédéterminée qui doit être suffisamment souple et élastique pour subir sans dommage le passage sur des rouleaux d'entraînement et sur des rouleaux de renvoi tout mais qui doit également être suffisamment rigide pour résister à tous les efforts qu'elle subit.

Cette extensibilité dépend notamment de l'armature 7 noyée dans le matériau 6 formant un enrobage de ladite armature, ce matériau étant relativement souple et élastique, de sorte que la résistance aux efforts de traction durant l'utilisation appliqués par la bande transporteuse 2 sur les moyens de fixation sont supportés par l'armature 7. En particulier, ces efforts sont répartis et localisés sur chacun des moyens de fixation 5 du dispositif de jonction.

Toutefois, ces efforts de traction relativement important et répétés, peuvent provoquer au niveau des moyens de fixation 5 situés en bordure de l'armature 7, et donc en bordure de la plaque de jonction 4 correspondante, l'élargissement de ces mailles, et donc un détissage de l'armature 7 ce qui peut nuire à son intégrité et à résistance.

Pour garantir la bonne tenue structurelle du dispositif de jonction, et en particulier de l'armature 7, ladite armature 7 présente, au niveau de ses bords transversaux 8 par rapport à la bande transporteuse 2, un renfort de détissage 9 de sorte à éviter le détissage de l'armature 7 lors de l'utilisation du dispositif de jonction 1. Les deux bords transversaux 8 de l'armature 7 sont, sur ces figures, sensiblement parallèles entre eux et traversant dans la largeur la bande transporteuse en position d'utilisation.

Une telle armature 7 offre un avantage certain en ce qu'elle évite le détissage de l'armature 7 soumis aux efforts de traction.

Par ailleurs, l'avantage d'une telle configuration ne s'arrête pas à cet avantage. Il a effectivement été constaté qu'avec un renfort de détissage 9 selon
l'invention situé en bordure, le long du bord transversal 8 de l'armature 7, cela entraîne une répartition plus homogène de l'effort de traction sur toutes les lignes de moyens de fixation.

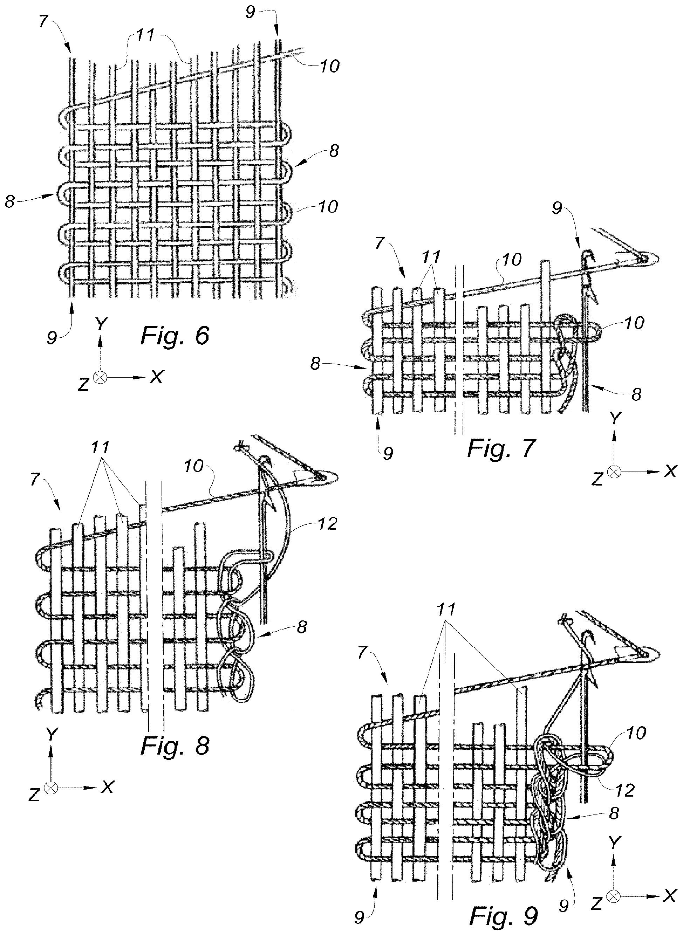

Les figures 6 à 12 illustrent plus en détail différents modes de réalisation de renforts de détissage , les figures 8-10 montrant des modes de réalisation se renforts de détissage conformément à l'invention.

Sur la figure 6 est illustré une armature textile présentant un entrecroisement de fils de chaîne 11 et de fils de trame 10. L'armure ici formée, c'est-à-dire le mode d'entrecroisement des fils de chaîne 11 et de fils de trame 10 est une armure toile 1:1, c'est-à-dire que le fil de trame 10 passe alternativement sur puis sous un fil de chaîne 11, et réciproquement.

L'armature 7 présente la forme d'une bande ou ruban dont les bords latéraux forment les bords transversaux 8 qui s'étendent transversalement par rapport à la bande transporteuse 2 lorsque le dispositif de jonction 1 est en position assemblée.

L'armature présente sur ces bords latéraux un renfort de détissage 9, formé à partir des fils de trame 10 de l'armature 7. En particulier, le renfort de détissage 9 est formé par le retour d'un fil de trame 10 de part et d'autre des fils de chaîne 11 de l'armature 7, le retour du fil de trame 10 entourant le fil de chaîne 11 du bord transversal 8 associé.

Une telle armature sous forme de bande ou ruban peut être obtenue par exemple avec un métier à navette. En d'autres termes, lors de la fabrication d'une telle armature, un système d'insertion de trame via un élément transportant une petite quantité de fil de trame stockée sur une bobine d'un bout à l'autre du tissu en cours de formation au travers de la foule, la foule désignant l'espace résultant de la séparation des fils de chaîne en deux lors de la fabrication pour permettre l'insertion dudit fil detrame en tissage entre les deux nappes ainsi formées.

Ce type de renfort est avantageux en ce que les fibres sont continues tout le long du ruban d'armature et leur intégritée est conservée. L'armature 7 obtenue avec un tel renfort 9 de détissage offre ainsi une tenue adaptée et une bonne souplesse pour l'application aux jonction de bandes transporteuses 2.

La figure 7 illustre une armature textile présentant un entrecroisement de fils de chaîne 11 et de fils de trame 10 : le fil de trame 10 passe alternativement sur puis sous un fil de chaîne 11, tandis que les fils de chaîne 11 passent sur puis sous deux fils de trame 10.

Dans une telle configuration, il apparait qu'au niveau d'un bord transversal 8, à gauche sur la figure 7, l'armature présente un renfort de détissage 9, formé à partir des fils de trame 10 de l'armature 7, et notamment par le retour d'un fil de trame 10 de part et d'autre des fils de chaîne 11 de l'armature 7, le retour du fil de trame 10 entourant le fil de chaîne 11 du bord transversal 8 associé.

Du fait que les les fils de chaîne 11 passent alternativement sur, puis sous, deux fils de trame 10, le renfort 9 au niveau de l'autre bord transversal 8, à droite sur la figure 7, est formé par la trame 10 liée à elle-même : celle-ci forme un retour ou boucle n'entourant pas le fil de chaîne 11 périphérique situé directement en bordure, la boucle formée par deux rangées de fils de trame 10 enlaçant la boucle suivante des deux autres rangée du fil de trame 10 dans le sens de tissage.

Une telle armature 7 peut être obtenue par exemple lors de la fabrication de l'armature 7 en utilisant un métier de tissage à aiguille telle qu'une aiguille à clapet, celle-ci étant visible sur la figure 7.

Ce renfort de détissage 9 est partilucièrement adapté dans le cas d'un fil de trame relativement fin et dans le cas où une surépaisseure n'est pas problématique. Il s'agit d'un renfort de détissage 9 facile à fabriquer.

La figure 8 illustre une armature 7 textile qui diffère essentiellement du mode de réalisation illustré sur la figure 7 en ce que le renfort 9 au niveau de l'autre bord transversal 8, à droite sur la figure 8, est tissé à partir d'un fil d'apport 12, distinct des fils de trame 10 et de chaîne 11 de l'armature 7, la trame étant liée par le fil d'apport 12.

Un tel renfort de détissage est particulièrement adapté pour éviter les surépaisseurs en lisière le long du bord transversal 8. En effet, le fil d'apport, ou fil de retenue, le plus souvent en monofilament fin, donne une maille de liage à peine visible. Il est en outre adapté pour les plus faibles efforts de traction.

La figure 9 illustre un autre mode de réalisation qui diffère essentiellement du mode de réalisation précédent en ce que le renfort de détissage 9 n'est pas seulement tissé à partir d'un fil d'apport 12, distinct des fils de trame 10 et de chaîne 11 de l'armature 7, mais le fil de trame 10 et le fil d'apport 12 sont maillés ensemble pour former le renfort de détissage 9 qui s'étend le long du bord transversal 8 correspondant de l'armature 7.

Un tel renfort de détissage 9 est particulièrement avantageux là ou la surépaisseur en lisière n'a pas d'importance, mais où l'indémaillabilité doit être maximalisée ou bien, là ou le fil de trame peut être pris dans la maille.

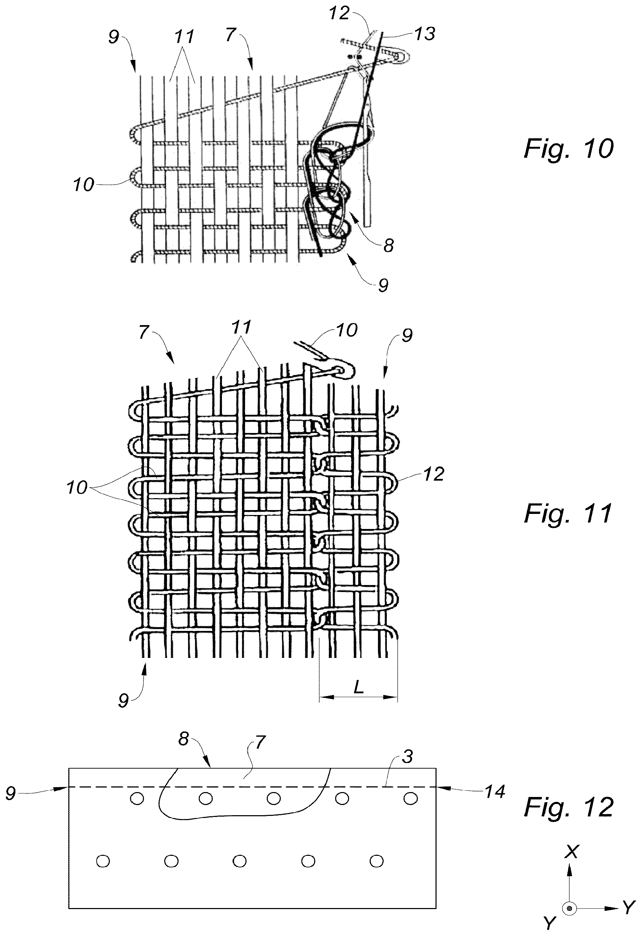

Sur la figure 10 est illustré un autre mode de réalisation, le renfort de détissage 9 comprend un fil d'apport 12 de façon similaire au précédent mode de réalisation, mais avec lequel les fils de trame 10 sont liés par maillage et dont la maille est en plus bloquée en outre par un fil de blocage 13.

Ce renfort de détissage 9 est particulièrement intéressant là où la surépaisseur en lisière doit être évitée, tout en assurant une indémaillabilité maximale. Ce renfort 9 présente également l'avantage d'être formé indépendamment du fil de trame.

La figure 11 illustre une armature 7 textile une armature textile qui diffère essentiellement du mode de réalisation illustré sur la figure 7 en ce que le renfort 9 au niveau de l'autre bord transversal 8, à droite sur la figure 11, est tissé à partir d'un fil d'apport 12, distinct des fils de trame 10 et de chaîne 11 de l'armature 7 et en ce que le renfort de détissage 9 est formé par un entrecroisement de fils de chaîne 11 avec le fil d'apport 12 lié au fil de trame.

En particulier, le fil d'apport 12 complète le fil de trame pour former le maillage de l'armature sur une distance L de liage du fil d'apport 12 par rapport à la lisière, le fil d'apport 12 étant en outre lié au fil de trame.

A la différence du mode de réalisation de la figure 8, ce n'est pas seulement la trame qui est liée par le fil d'apport 12 mais aussi le fil de chaîne 11 sur une distance prédéterminée par rapport à la lisière de l'armature 7.

Plus généralement, et en fonction également de l'utilisation de la bande transporteuse et de sorte à adapter l'armature en fonction des efforts de traction liés à l'application, le renfort de détissage 9 peut être configuré de façons différentes. Par exemple, dans d'autres modes de réalisation, alternatifs ou complémentaires, les renforts de détissage comportent un renfort collé et/ou soudé et/ou cousu, de sorte à former une couture 14 (par exemple surfilage), s'étendant le long du bord transversal 8 de l'armature 7.

Un autre exemple de renfort de détissage 9, alternatif ou complémentaire, peut consister en un traitement adapté de l'armature au niveau du bord transversal considéré : cela peut être un traitement chimique, ou l'application d'un produit de renfort par trempage qui, après séchage, permet de renforcer les bords transversaux.

Ces types de renforts de détissage sont particulièrement intéressants dans le cas où, pour des raisons structurale, les fils de chaîne ne sont pas positionnés parallèlement aux bords transversaux, comme illustré par exemple sur l'écorché 1B de la figure 1.

Pour améliorer encore leur résistance dans ce cas, un fil d'apport 12 est ajouté pour coudre le bord transversal lui-même de sorte à le ligaturer, par exemple en entourant de façon spiralée ledit bord transversal associé.

La figure 12 illustre une plaque de jonction 4 en matériau enrobant l'armature 7, dans lequel, le long du bord transversal, une couture s'étend au parallèlement audit bord transversal 8, entre ce bord et la rangée voisine des moyens de fixation 5.

L'invention est décrite dans ce qui précède à titre d'exemple. Il est entendu que l'homme du métier est à même de réaliser différentes variantes de réalisation de l'invention sans pour autant sortir du cadre de l'invention.

Par exemple, compte tenu des distances pour transporter différents matériaux ou différents produits selon les usages dans des carrières ou autres lieux d'utilisation, un même tapis transporteur ou convoyeur peut être formé par la réunion ou jonction de plusieurs bandes transporteuses reliées ensemble par un dispositif de jonction tel que décrit ci-avant.

Par ailleurs, il est entendu que d'autres moyens de fixation que les vis peuvent être utilisés tout en assurant la même fonction.

Enfin, le vocable « transversal » liés au bord de l'armature, ou de la plaque de jonction doit être compris comme s'étendant, une fois le dispositif de jonction assemblé avec les extrémités de la bande, d'un côté à l'autre de la bande transporteuse en la traversant sur sa largeur. Cela ne limite pas l'invention à une disposition des plaques de jonction perpendiculairement à la bande transporteuse, le dispositif de jonction pouvant parfaitement présenter un angle différent de 90° par rapport à l'axe longitudinal.

## Revendications

1. Dispositif de jonction (1) pour bande transporteuse (2), destiné à relier deux extrémités (3) d'au moins une bande transporteuse (2) longitudinale, le dispositif de jonction (1) comprenant au moins deux plaques de jonction (4) configurées pour recouvrir chacune un côté distinct des extrémités (3) de la bande transporteuse (2) de sorte à ce que ladite bande transporteuse (2) soit disposée entre les deux plaques de jonction (4) dans une position assemblée d'utilisation, les plaques de jonction (4) étant fixées ensemble par des moyens de fixation (5) agencés pour traverser respectivement une plaque de jonction (4), une des extrémités (3) de la bande transporteuse (2) puis l'autre plaque de jonction (4), chacune des plaques de jonction (4) étant réalisées en une matière (6) souple et élastique et dotée d'une armature (7), ladite armature (7) étant formée d'au moins une couche de textile comprenant des fils de trame (10) et des fils de chaîne (11), ladite armature (7) étant délimitée longitudinalement par des bords (8) transversaux, l'armature (7) s'étendant transversalement par rapport à ladite bande transporteuse (2) en position assemblée, lesdits bords (8) transversaux présentant chacun un renfort de détissage (9) de sorte à éviter le détissage de l'armature (7) lors de l'utilisation du dispositif de jonction (1), le renfort de détissage (9) étant tissé, le dispositif de jonction (1) étant **caractérisé en ce que** le renfort de détissage (9) comprend au moins un fil d'apport (12).

2. Dispositif de jonction (1) selon la revendication 1, **caractérisé en ce que** le renfort de détissage est formé par le fil d'apport (12) liant la trame (10).

3. Dispositif de jonction (1) selon la revendication 1 ou 2, **caractérisé en ce que** le fil de trame (10) et le fil d'apport (12) sont maillés ensemble pour former le renfort de détissage (9).

4. Dispositif de jonction (1) selon l'une quelconque des revendications précédentes, **caractérisé en ce que** le fil d'apport (12) et les fils de trame (10) sont liés par maillage, la maille étant bloquée en outre par un fil de blocage (13).

5. Dispositif de jonction (1) selon la revendication 1 ou 2, **caractérisé en ce que** le renfort de détissage (9) est formé par un entrecroisement de fils de chaîne (11) avec le fil d'apport (12) lié au fil de trame.

## Patentansprüche

1. Verbindungsvorrichtung (1) für ein Förderband (2), die zum Aneinanderbefestigen zweier Enden (3) mindestens eines Längsförderbandes (2) bestimmt ist, wobei die Verbindungsvorrichtung (1) mindestens zwei Verbindungsplatten (4) umfasst, die so konfiguriert sind, dass sie jeweils eine separate Seite der Enden (3) des Förderbandes (2) abdecken, so dass das Förderband (2) in einer zusammengesetzten Gebrauchsposition zwischen den zwei Verbindungsplatten (4) angeordnet ist, wobei die Verbindungsplatten (4) durch Befestigungsmittel (5) miteinander befestigt sind, die so angeordnet sind, dass sie jeweils eine Verbindungsplatte (4), eines der Enden (3) des Förderbandes (2), dann die andere Verbindungsplatte (4) durchsetzen, wobei jede der Verbindungsplatten (4) aus einem weichen und elastischen Material (6) gefertigt und mit einer Verstärkung (7) versehen ist, wobei die Verstärkung (7) aus mindestens einer Schussfäden (10) und Kettfäden (11) umfassenden Textillage gebildet ist, wobei die Verstärkung (7) in Längsrichtung durch quer verlaufende Kanten (8) begrenzt ist, wobei sich die Verstärkung (7) in zusammengesetzter Position quer zu dem Förderband (2) erstreckt, wobei die quer verlaufenden Kanten (8) jeweils eine Auflöseverfestigung (9) aufweisen, um das Auflösen der Verstärkung (7) bei dem Gebrauch der Verbindungsvorrichtung (1) zu unterbinden, wobei die Auflöseverfestigung (9) gewebt ist, wobei die Verbindungsvorrichtung (1) **dadurch gekennzeichnet ist, dass** die Auflöseverfestigung (9) mindestens einen Zusatzfaden (12) umfasst.

2. Verbindungsvorrichtung (1) nach Anspruch 1,
**dadurch gekennzeichnet, dass** Auflöseverfestigung durch den Zusatzfaden (12) gebildet wird, der den Schuss (10) verknüpft.

3. Verbindungsvorrichtung (1) nach Anspruch 1 oder 2,
**dadurch gekennzeichnet, dass** der Schussfaden (10) und der Zusatzfaden (12) miteinander verwirkt sind, um die Auflöseverfestigung (9) zu bilden.

4. Verbindungsvorrichtung (1) nach einem der vorstehenden Ansprüche,
**dadurch gekennzeichnet, dass** der Zusatzfaden (12) und die Schussfäden (10) durch ein Gewirke verknüpft sind, wobei die Masche ferner durch einen Blockierfaden (13) blockiert wird.

5. Verbindungsvorrichtung (1) nach Anspruch 1 oder 2,
**dadurch gekennzeichnet, dass** die Auflöseverfestigung (9) durch Verflechtung von Kettfäden (11) mit dem mit dem Schussfaden verknüpften Zusatzfaden (12) gebildet ist.

## Claims

1. A junction device (1) for a conveyor belt (2), which junction device is intended for connecting two ends (3) of at least one longitudinal conveyor belt (2), the junction device (1) comprising at least two junction plates (4) configured to each cover a separate side of the ends (3) of the conveyor belt (2) such that said conveyor belt (2) is arranged between the two junction plates (4) in an assembled use position, the junction plates (4) being attached together by attachment means (5) arranged to pass through, respectively, a junction plate (4), one of the ends (3) of the conveyor belt (2) and then the other junction plate (4), each of the junction plates (4) being made of a flexible and resilient material (6) and being provided with a reinforcement (7), said reinforcement (7) being formed by at least one textile layer comprising weft threads (10) and warp threads (11), said reinforcement (7) being delimited longitudinally by transverse edges (8), the reinforcement (7) extending transversely with respect to said conveyor belt (2) in the assembled position, said transverse edges (8) each having an unweaving support (9) so as to prevent the reinforcement (7) from unweaving during the use of the junction device (1), the unweaving support (9) being woven, the junction device (1) being **characterized in that** the unweaving support (9) comprises at least one inlaid thread (12).

2. The junction device (1) according to claim 1, **characterized in that** the unweaving support is formed by the inlaid thread (12) binding the weft (10).

3. The junction device (1) according to claim 1 or 2, **characterized in that** the weft thread (10) and the inlaid thread (12) are meshed together to form the unweaving support (9).

4. The junction device (1) according to any of the preceding claims, **characterized in that** the inlaid thread (12) and the weft threads (10) are bound by meshing, the mesh being also blocked by a blocking thread (13).

5. The junction device (1) according to claim 1 or 2, **characterized in that** the unweaving support (9) is formed by interweaving warp threads (11) with the inlaid thread (12) bound to the weft thread.
